# EUROPEAN PATENT APPLICATION

(11) **EP 2 392 799 A1**
(43) Date of publication of application: **07.12.2011**
(21) Application number: 09839245.9
(22) Date of filing: 07.10.2009
(51) Int. Cl.: F02D 9/10, F02D 9/06, F16K 1/22

(54) **EXHAUST THROTTLE VALVE FOR INTERNAL COMBUSTION ENGINE**

(30) Priority: 30.01.2009 JP 2009019540
(71) Applicant: Taiho Kogyo Co., Ltd, Toyota-shi Aichi 471-8502 (JP)
(72) Inventor: IKEDA, Satoshi, Toyota-shi Aichi 471-8502 (JP); UTO, Akihiro, Toyota-shi Aichi 471-8502 (JP); NOGUCHI, Naoto, Toyota-shi Aichi 471-8502 (JP)
(74) Representative: Cabinet Plasseraud
(86) International application number: PCT/JP2009/067470
(87) International publication number: WO 2010/087056

(57) **Abstract**

An exhaust throttle valve (1) includes a housing (2) formed with a gas passage (2a), first and second valve shafts (4) rotatably journaled in the housing (2), a large valve body (5) connected to the first valve shaft, and a small valve body (6) connected the second valve shaft (4). A communication hole (17) is provided in the large valve body (5), and urging means that urges the small valve body (6) in a direction of abutting against the large valve body (5) is provided in the second valve shaft (4). When the large valve body (5) closes the gas passage (2a) and pressure of a gas in the gas passage (2a) increases from a state where the small valve body (6) closes the communication hole (17), the small valve body (6) is separated from the large valve body (5) against an urging force of the urging means to open the communication hole (17). With an easy configuration, exhaust gas pressure can be adjusted without depending on a gas temperature difference.

## Description

### Technical Field

The present invention relates to an exhaust throttle valve for an internal combustion engine, and more particularly to an exhaust throttle valve for an internal combustion engine including a housing formed with a gas passage through which a gas passes, and a valve body that opens and closes the gas passage.

### Background Art

Conventionally, an exhaust throttle valve for an internal combustion engine is known including a housing formed with a gas passage through which a gas passes and a through hole provided in a direction perpendicular to the gas passage, a valve shaft rotatably journaled in the through hole, and a valve body that is connected to the valve shaft and opens and closes the gas passage.
As such an exhaust throttle valve, a valve is known in which a communication hole is provided in a first valve body that opens and closes a gas passage, a second valve body formed of a metal leaf spring is provided to cover the communication hole, and the second valve body is deformed to open the communication hole when pressure of a gas in the gas passage becomes predetermined pressure or more (Patent Document 1).
Also, as another exhaust pressure control device, a device is known in which a bypass passage branching from a gas passage and a bypass valve that opens and closes the bypass passage are provided in a housing, and opening and closing of a valve body provided in the gas passage and the bypass valve are controlled (Patent Document 2).

### Prior Art Documents

### Patent Documents

Patent Document 1: Japanese Patent Laid-Open No. 10-220253
Patent Document 2: Japanese Patent Laid-Open No. 2007-247488

### Disclosure of the Invention

### Problems to be Solved by the Invention

However, for the exhaust throttle valve in Patent Document 1, the second valve body is made of metal and provided integrally with the first valve body, and thus a temperature change of a gas passing through the gas passage changes spring properties. Thus, timing when the second valve body is opened changes to cause variations in performance.
Also, for the exhaust pressure control device in Patent Document 2, the bypass passage and the bypass valve need to be newly provided to increase a size of the exhaust pressure control device and increase costs.
In view of such problems, the present invention provides an exhaust throttle valve for an internal combustion engine that is easily configured and does not depend on a gas temperature difference.

### Means for Solving the Problems

Specifically, the present invention provides an exhaust throttle valve for an internal combustion engine including: a housing formed with a gas passage through which a gas passes; a valve shaft rotatably journaled in the housing; and a valve body that is connected to the valve shaft and opens and closes the gas passage, **characterized in that** the valve shaft includes a first valve shaft and a second valve shaft that are coaxially provided and are relatively rotatable, the valve body includes a large valve body that is connected to the first valve shaft and formed to have substantially the same diameter as the gas passage, a communication hole provided in the large valve body, and a small valve body that is connected to the second valve shaft and abuts against the large valve body to close the communication hole, urging means that urges the second valve shaft in a direction of the small valve body abutting against the large valve body is provided outside the gas passage, and when pressure of the gas in the gas passage increases with the large valve body closing the gas passage, the small valve body is separated from the large valve body against the urging force by the urging means to open the communication hole.

### Advantages of the Invention

According to the above-described invention, the urging means is provided outside the gas passage, and thus a change in timing when the small valve body is opened based on a temperature difference of the gas passing through the gas passage can be prevented as much as possible, thereby obtaining a stable exhaust pressure control function.
Also, there is no need for a bypass passage or a bypass valve as in Patent Document 2, allowing an easy configuration and a reduction in size.

### Brief Description of the Drawings

Figure 1 is a sectional view of an exhaust throttle valve according to an embodiment; and
Figure 2 is a sectional view taken along the line II-II in Figure 1 and shows an operation of the exhaust throttle valve.

### Best Mode for Carrying Out the Invention

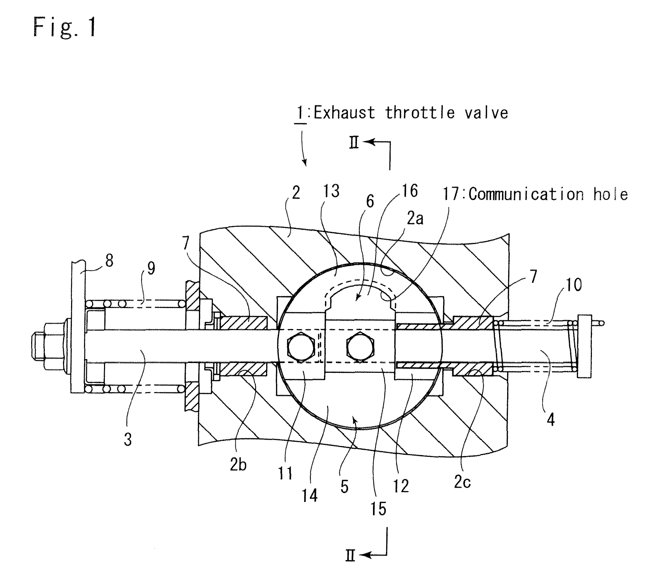

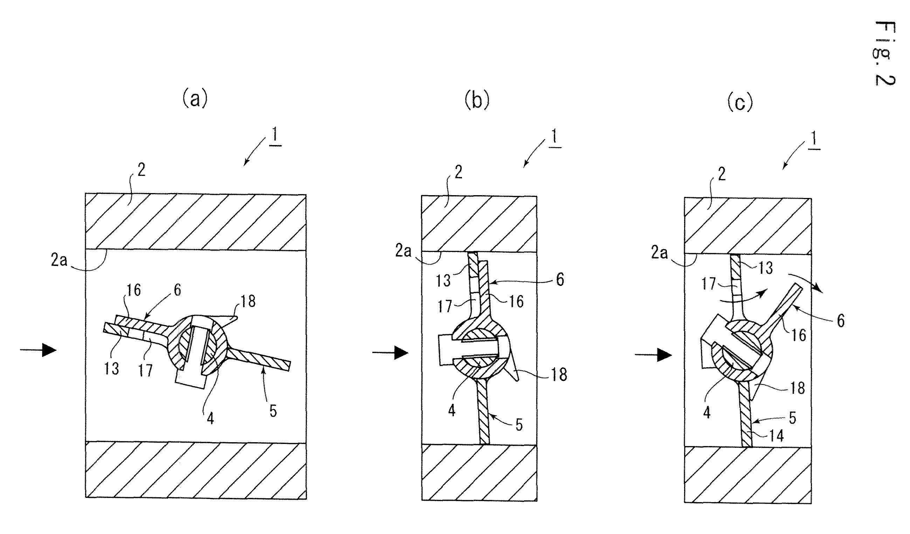

Now, a shown embodiment will be described. Figures 1 and 2 show an exhaust throttle valve 1 provided in an exhaust pipe of a diesel engine as an internal combustion engine, and in Figure 1, an exhaust gas passes from the front to the back on the sheet plane, and Figure 2(b) shows a section taken along the line II-II in Figure 1.
The exhaust throttle valve 1 for the internal combustion engine includes a housing 2 formed with a gas passage 2a through which the exhaust gas passes, a first valve shaft 3 and a second valve shaft 4 rotatably journaled in the housing 2, a large valve body 5 that is connected to the first valve shaft 3 and has substantially the same diameter as the gas passage 2a, and a small valve body 6 connected to the second valve shaft 4.
The gas passage 2a of the housing 2 has a substantially circular shape, and a first through hole 2b shown on the left and a second through hole 2c shown on the right are coaxially provided with the gas passage 2a therebetween. The first valve shaft 3 is rotatably held in the first through hole 2b via a bearing 7, and the second valve shaft 4 is rotatably held in the second through hole 2c via a bearing 7.

The first and second valve shafts 3 and 4 are journaled in the first and second through holes 2b and 2c and thus rotate coaxially, and in this embodiment, a tip of the first valve shaft 3 and a tip of the second valve shaft 4 are close to each other in a position on the left in Figure 1 with respect to the center of the gas passage 2a.
The first valve shaft 3 is rotatably driven by an unshown actuator via an arm 8 provided at the left end in Figure 1, and switches the large valve body 5 between an opened state in Figure 2(a) and a closed state in Figures 2(b) and 2(c).
On the outside of the gas passage 2a, a first torsion coil spring 9 is provided to surround the first valve shaft 3, and the first torsion coil spring 9 is elastically fitted between the first valve shaft 3 and the housing 2 to urge the first valve shaft 3 counterclockwise shown in each drawing of Figure 2.
With such a configuration, in a non-operating state of the exhaust throttle valve 1 shown in Figure 2(a), the actuator holds the large valve body 5 in the opened state, and the large valve body 5 is maintained in the opened state by the urging force by the first torsion coil spring 9.
In an operating state of the exhaust throttle valve 1 shown in Figures 2(b) and 2(c), the actuator rotates the first valve shaft 3 clockwise against the urging force by the first torsion coil spring 9 to close the large valve body 5.

On the outside of the gas passage 2a, a second torsion coil spring 10 as urging means is provided to surround the second valve shaft 4, and the second torsion coil spring 10 is elastically fitted between the second valve shaft 4 and the housing 2 to urge the second valve shaft 4 counterclockwise shown in each drawing of Figure 2.
With such a configuration, in the states shown in Figures 2(a) and 2(b), the small valve body 6 abuts against the large valve body 5 by the urging force of the second torsion coil spring 10, and when pressure exceeding the urging force by the second torsion coil spring 10 is applied to the small valve body 6 as shown in Figure 2(c), the small valve body 6 rotates with respect to the large valve body 5.

The large valve body 5 includes a tubular first valve shaft holding portion 11 that is formed on the side of the first through hole 2b and into which the first valve shaft 3 can be inserted, a tubular second valve shaft passing portion 12 that is formed on the side of the second through hole 2c and rotatably holds the second valve shaft 4, a substantially semicircular first flap 13 protruding from the first valve shaft holding portion 11 and the second valve shaft passing portion 12, and a substantially semicircular second flap 14 protruding from the side opposite to the first flap 13.
The first valve shaft 3 is inserted into the first valve shaft holding portion 11 and connected and secured by a bolt, and the second valve shaft 4 is rotatably journaled in the second valve shaft passing portion 12 via the bearing 7 inserted into the second valve shaft passing portion 12.
The small valve body 6 is located between the first valve shaft holding portion 11 and the second valve shaft passing portion 12 of the large valve body 5, and includes a tubular second valve shaft holding portion 15 into which the second valve shaft 4 can be inserted, and a third flap 16 having a substantially semicircular end protruding from the second valve shaft holding portion 15.
The second valve shaft 4 passing through the second valve shaft passing portion 12 of the large valve body 5 is inserted into the second valve shaft holding portion 15 and connected and secured by a bolt.
The third flap 16 is provided in a position offset from the center of the second valve shaft 4 as shown in each drawing of Figure 2, and in a state where the large valve body 5 and the small valve body 6 are closed, the first flap 13 and the third flap 16 are brought into tight contact with each other.

In the first flap 13 of the large valve body 5, a communication hole 17 is formed having a slightly smaller shape than the third flap 16 of the small valve body 6.
Specifically, the communication hole 17 is formed to have the same width as the third flap 16 in a base of the first flap 13, and have, via a step, a smaller width than the width of the third flap 16. An outer peripheral end of the communication hole 17 has a substantially semicircular shape having a slightly smaller diameter than the substantially semicircular shape on the outer peripheral side of the third flap 16. Also, the communication hole 17 may have any shape such as a rectangular or oval shape.
The communication hole 17 has such a shape, and thus when the third flap 16 abuts against the first flap 13, the outer peripheral portion of the third flap 16 abuts against the first flap 13 so as to cover the outer peripheral portion of the communication hole 17, and thus the communication hole 17 is closed by the small valve body 6.
Further, a protrusion 18 as stopper means is formed on an outer periphery of the second valve shaft holding portion 15 of the small valve body 6, and as shown in Figure 2(c), when the small valve body 6 is opened to a predetermined degree of opening with respect to the large valve body 5, the protrusion 18 abuts against the second flap 14 of the large valve body 5 to hold the degrees of opening of the small valve body 6 and the large valve body 5.

An operation of the exhaust throttle valve 1 having the above-described configuration will be described. First, in the non-operating state of the exhaust throttle valve 1 shown in Figure 2(a), the large valve body 5 is held in the opened state by the actuator, and the exhaust gas passing through the gas passage 2a passes without being interrupted.
At this time, the second torsion coil spring 10 urges the second valve shaft 4 and thus the third flap 16 of the small valve body 6 abuts against the first flap 13 of the large valve body 5, and the communication hole 17 is closed by the third flap 16.

Next, Figure 2(b) shows the operating state of the exhaust throttle valve 1 in which the large valve body 5 is closed by the actuator, and the exhaust gas passing through the gas passage 2a is interrupted by the large valve body 5 and the small valve body 6.
At this time, when the actuator rotates the first valve shaft 3 clockwise, the first flap 13 presses the third flap 16 of the small valve body 6 clockwise, and the gas passage 2a is closed with the large valve body 5 and the small valve body 6 being maintained closed.
At this time, the second valve shaft 4 rotates clockwise against the urging force of the second torsion coil spring 10, and thus the third flap 16 of the small valve body 6 is maintained abutting the first flap 13 of the large valve body 5 from a downstream side of the gas passage 2a.
Thus, the communication hole 17 of the large valve body 5 is maintained closed by the third flap 16 of the small valve body 6, and the exhaust gas is interrupted by the closed large valve body 5 and small valve body 6.

Next, Figure 2(c) shows a state where a part of the exhaust gas is passed through the communication hole 17 to adjust pressure in the gas passage 2a, compared with the state in Figure 2(b). When the gas passage 2a is interrupted as shown in Figure 2(b), the pressure of the exhaust gas increases on an upstream side of the large valve body 5 and the small valve body 6, and thus the pressure of the exhaust gas applied to the third flap 16 of the small valve body 6 exceeds the urging force of the second torsion coil spring 10 that urges the second valve shaft 4. Then, the second valve shaft 4 rotates against the urging force by the second torsion coil spring 10, and the third flap 16 of the small valve body 6 is separated from the first flap 13 of the large valve body 5 to open the communication hole 17. The communication hole 17 is opened and the exhaust gas passes through the communication hole 17, and thus the pressure of the exhaust gas interrupted by the large valve body 5 and the small valve body 6 decreases to adjust the pressure of the exhaust gas in the gas passage 2a. Timing when the third flap 16 is separated from the first flap 13 to open the communication hole 17 can be arbitrarily set by adjusting the urging force by the second torsion coil spring 10. Then, when the third flap 16 is opened by a predetermined angle with respect to the first flap 13, the protrusion 18 provided on the small valve body 6 abuts against the second flap 14 of the large valve body 5 to prevent the small valve body 6 from being excessively opened with respect to the large valve body 5. Then, the pressure of the exhaust gas decreases or the exhaust throttle valve 1 is set to the non-operating state, and thus the pressure of the exhaust gas applied to the third flap 16 of the small valve body 6 decreases, and thus the third flap 16 abuts against the first flap 13 by the urging force by the second torsion coil spring 10 to close the communication hole 17.

With the above-described exhaust throttle valve 1, when the pressure of the exhaust gas in the gas passage 2a increases when the large valve body 5 is closed, the small valve body 6 is opened to open the communication hole 17 formed in the large valve body 5, thereby allowing the pressure of the exhaust gas to be adjusted.
Also, the second valve shaft 4 to which the small valve body 6 is connected is urged by the second torsion coil spring 10 provided outside the housing 2, and thus a temperature change of the gas in the gas passage 2a hardly changes the urging force by the second torsion coil spring 10, thereby obtaining a stable operation.

Instead of the above-described embodiment, for example, it may be allowed that the second through hole 2c of the housing 2 is omitted, the second valve shaft 4 is rotatably provided in the first valve shaft 3, and the large valve body 5 and the small valve body 6 are provided in the first and second valve shafts 3 and 4.
In this case, it may be allowed that the second torsion coil spring 10 is elastically fitted between the first valve shaft 3 and the second valve shaft 4, and the second torsion coil spring 10 urges the large valve body 5 and the small valve body 6 to be closed.
The first and second torsion coil springs 9,10 may be compression springs.

### Description of Symbols

- 1: exhaust throttle valve
- 2: housing
- 2a: gas passage
- 3: first valve shaft
- 4: second valve shaft
- 5: large valve body
- 6: small valve body
- 17: communication hole

## Claims

1. An exhaust throttle valve (1) for an internal combustion engine comprising:
a housing (2) formed with a gas passage (2a) through which a gas passes;
a valve shaft rotatably journaled in said housing (2); and
a valve body that is connected to said valve shaft and opens and closes said gas passage (2a),
**characterized in that** said valve shaft includes a first valve shaft (3) and a second valve shaft (4) that are coaxially provided and are relatively rotatable,
said valve body includes a large valve body (5) that is connected to said first valve shaft (3) and formed to have substantially the same diameter as the gas passage (2a), a communication hole (17) provided in said large valve body (5), and a small valve body (6) that is connected to said second valve shaft (4) and abuts against the large valve body (5) to close said communication hole (17),
urging means that urges said second valve shaft (4) in a direction of said small valve body (6) abutting against said large valve body (5) is provided outside the gas passage (2a), and
when pressure of the gas in the gas passage (2a) increases with said large valve body (5) closing the gas passage (2a), said small valve body (6) is separated from the large valve body (5) against the urging force by said urging means to open said communication hole (17).

2. The exhaust throttle valve (1) for an internal combustion engine according to claim 1, **characterized in that** said urging means is a torsion coil spring surrounding said second valve shaft (4) and elastically fitted between said second valve shaft (4) and the housing (2).

3. The exhaust throttle valve (1) for an internal combustion engine according to claim 1 or 2, **characterized in that** a first through hole and a second through hole are provided in said housing (2) so as to face each other with the gas passage (2a) therebetween, said first valve shaft (3) is provided in the first through hole, and said second valve shaft (4) is provided in the second through hole.

4. The exhaust throttle valve (1) for an internal combustion engine according to claim 3, **characterized in that** said large valve body (5) includes a first valve shaft holding portion that is formed on the side of the first through hole and to which the first valve shaft (3) is connected, a second valve shaft passing portion that is formed on the side of the second through hole and rotatably holds the second valve shaft (4), a first flap protruding from the first valve shaft holding portion and the second valve shaft passing portion, and a second flap protruding from the side opposite to the first flap,
said small valve body (6) includes a second valve shaft holding portion located between the first valve shaft holding portion and the second valve shaft passing portion of said large valve body (5) and to which the second valve shaft passing through said second valve shaft holding portion is connected, and a third flap protruding from said second valve shaft holding portion,
a communication hole (17) having a smaller opening than said third flap is formed in said first flap, and said urging means urges the third flap to abut against the first flap from a downstream side of the gas passage (2a) via the second valve shaft (4).

5. The exhaust throttle valve (1) for an internal combustion engine according to any one of claims 1 to 4, **characterized in that** stopper means is provided that holds the small valve body (6) and the large valve body (5) at predetermined degrees of opening when said small valve body (6) is separated from the large valve body (5).
